# EUROPEAN PATENT SPECIFICATION

(11) **EP 2 052 092 B1**
(45) Date of publication and mention of the grant of the patent: **12.03.2014**
(21) Application number: 07787510.2
(22) Date of filing: 13.07.2007
(51) Int. Cl.: C22B 11/08

(54) **A METHOD FOR RECOVERING NOBLE METALS**
VERFAHREN ZUR RÜCKGEWINNUNG VON EDELMETALLEN
PROCÉDÉ DE RÉCUPÉRATION DE MÉTAUX NOBLES

(30) Priority: 14.07.2006 CH 11382006
(43) Date of publication of application: 29.04.2009
(73) Proprietor: Gavia, S.A., 6996 Ponte Cremenaga (CH)
(72) Inventor: TSCHANEN, Moïse, CH-6983 Magliaso (CH)
(74) Representative: Gervasi, Gemma
(86) International application number: PCT/EP2007/057242
(87) International publication number: WO 2008/006901

(56) References cited:
- EP-A1- 0 702 099
- JP-A- 9 241 855
- US-A- 3 935 005
- US-A- 4 483 739
- US-A- 4 548 791

## Description

### FIELD OF THE INVENTION

The method relates to the recovery of noble metals, specifically gold, silver and palladium, from materials to be recycled or to be disposed of, specifically from electric and electronic material discards, as for instance obsolete apparatuses, from electric power plant and electric and telephone control unit scraps, from electronic fractionation, production scraps and discards also deriving from the jewellery sector.

### STATE OF THE ART

The peculiar physical-chemical properties of noble metals have determined an Increasing use thereof for industrial purposes, specifically in electrical, electronic and microelectronic component production. This broad use makes the recovery thereof necessary both to limit environmental pollution due to disposal of products containing therm and because of the relative shortage of natural sources thereof with a subsequent high impact on the cost thereof. Therefore, the recovery thereof first of all meets the need of limiting the environmental impact due to the disposal of the products containing them and of recycling metals having high economic value. As a whole, all of these elements determine a considerable interest for safe industrial processes that have a low environmental impact for the recovery of these noble metals.

Substantially, these metals are often included in other materials, thus leading them not to be immediately available to the action of chemical agents used for the recovery thereof.

Currently, the traditional methods known to a person skilled in the art for the recovery of these metals generally provide that the material containing them is treated at high temperatures with aggressive agents such as chlorine (pyrometallurgical chlorination) or strong acids and oxidants (acid dissolution) or strong base (alkaline dissolution) and that such metals are subsequently separated by conventional techniques.

Pyrometallurgical chlorination is a very well-known process which is widely used for the recovery of noble metals. In general, the procedure exploits a thermal treatment occurring at high temperatures with a flow of gases which are very toxic and/or aggressive and/or have a significant environmental impact, such as Cl₂, CO, COCl₂, CCl₄, S₂Cl₂ e SOCl₂ or mixtures thereof.

A variety of other procedures have been suggested for the dissolution technique with strong acids and oxidants. However, such methods are based in general on the dissolution of metals having high oxidation potential, by using strong acids (extremely dangerous for the operators) such as sulphuric acid, nitric acid or a mixture of hydrochloric acid/nitric acid known with the name of 'aqua regia', followed by the recovery of the metals from the solution by means of conventional methods such as electrolytic deposition or selective complexation with appropriate binding agents, depending on the metal.

Overall, the problems arising for the recovery of noble metals are: i) the use of reagents that display extreme hazardousness for the environment and/or for the operators in relation to the toxicity and aggressiveness thereof; ii) the need of a pre-treatment in the case of the dissolution with strong oxidant acids or bases and subsequent extraction; iii) high exercise temperatures; iv) prolonged times for the dissolution of the metals.

US 4,548,791 discloses a water-soluble composition comprising on weight basis from 8 to 30 parts of nitrobenzoic acid derivatives selected from chloronitrobenzoic acids and alkali metal nitrobenzoates, from 40 to 135 parts of a cyanide radical source compound, from 0.03 to 0.1 parts of a thallium compound, optionally from 0.08 to 0.3 parts of a lead compound, and a hydroxide for a pH value of 11-13, for use as aqueous stripping solution of gold, palladium and palladium/nickel alloy deposits. The process is carried out at temperatures comprised from 18° C to 55° C.

EP 0702099 discloses an electroless gold plating solution comprising 5-500 mg/l of sodium nitrobenzenesulfonate and/or p-nitrobenzoic acid to control the reduction rate of gold, In a form of alkali metal gold cyanide, induced by a reducing boron-based agent. Thallium and/or lead compounds can be added to raise the deposit rate. Other components of the solution can be a chelating agent as complexing agents to prevent gold precipitation induced by high concentrations of thallium or lead compounds and a base (i.e. alkali metal hydroxide) to obtain a pH value of 11-14. The process is carried out at temperatures comprised from 50° C to 80° C.

Therefore, to overcome the above mentioned problems, it is a first purpose to provide a method for the recovery of noble metals in mild conditions with respect to the reagents, the temperatures and the dissolution times employed.

A second purpose is to provide a method that may be carried out in a closed cycle to bypass problems regarding environmental pollution and the safety of operators. A further purpose is to provide a method for the recovery of noble metals which is easy to industrialise, economically advantageous and displays significant yields for the recovered metals.

### SUMMARY

These and other purposes are achieved by the object of the present invention, it providing a simple method for the recovery of noble methods in mild reaction conditions which are safe for operators.

It is therefore an object of the present invention to provide a method for the recovery of noble metals characterised in that said metals are dissolved by materials containing them with an aqueous solution comprising potassium cyanide in a range from 1.5 to 2.5 % w/v (g/100 ml), sodium nitrobenzosulphonate in a range from 0.6 to 1.0 % w/v (g/100 ml), thallium sulphate in a range from 0.015 to 0.025 % w/v (g/100 ml).

The subsequent extraction of the dissolved metals from the above described dissolution solution and the separation of the metals dissolved in the same may be carried out by conventional methods known to a person skilled In the art.

### BRIEF DESCRIPTION OF THE FIGURES

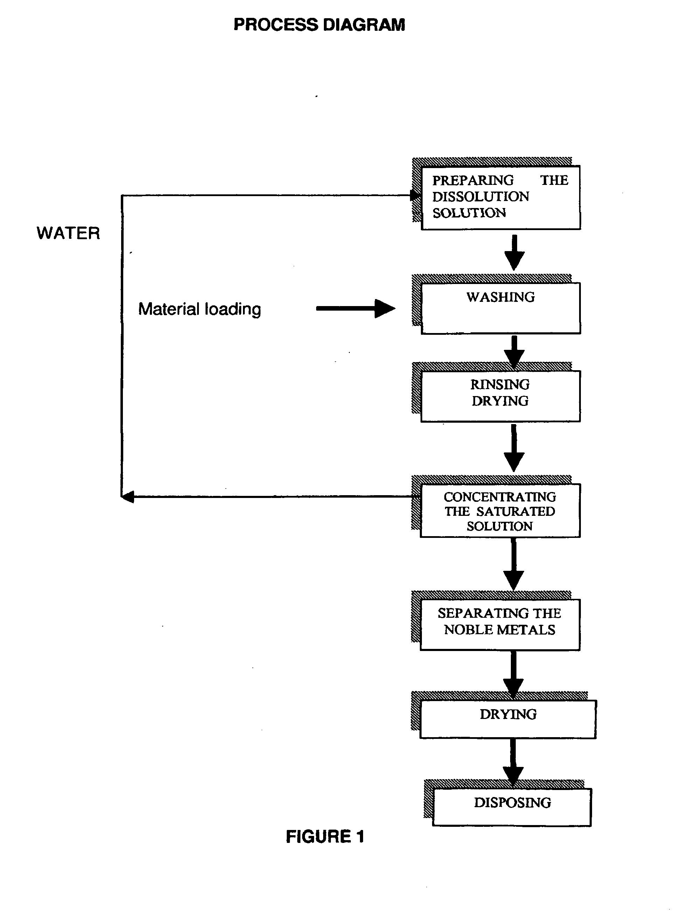

FIGURE 1: diagram of a process for the recovery of noble metals according to the invention.

### DETAILED DESCRIPTION OF THE INVENTION

The object of the invention will be better understood in virtue of the following description of a preferred embodiment of the method which is given by way of non-limitative illustration of the present invention.

The method for the recovery of noble metals which is the object of the present invention is characterised essentially for the use of a composition consisting in an aqueous solution comprising three distinct reagents serving to rapidly and irreversibly dissolve the noble metals, especially gold, silver and palladium, contained in materials intended for recycling or disposal and specifically in electric and electronic material discards, or more precisely obsolete apparatuses, from electric power plant and electric and telephone control unit scraps, from electronic fractionation, and production scraps and discards, etc.

For this purpose, such materials containing the metals to be recovered are preferably grinded with a granulometry in the range from 0.05 cm to whole piece and preferably of 0.5 cm and more preferably of 0.10 cm. Such grinding is carried out according to known conventional methods and preferably by a two or three shafted granulator or rotating blade grinder having a power in the range from 15 to 25 HP and a yield from 400 to 800 kg of material / hour depending on the type of material to grind.

The materials obtained in this manner which contain the metals to recover are then treated with an aqueous solution comprising potassium cyanide in a range from 1.5 to 2.5 % w/v (g/100 ml), sodium nitrobenzosulphonate in a range from 0.6 to 1.0 % w/v (g/100 ml), thallium sulphate in a range between 0.015 and 0.025 % w/v (g/100 ml) capable of dissolving such noble metals.

For the purposes of the present invention the aqueous solution preferably comprises 2 % w/v potassium cyanide, 0.8 % w/v sodium nitrobenzosulphonate, 0.02 % w/v thallium sulphate.

To obtain a virtually total dissolution of the metals following the exposure thereof to the reagents included in the dissolution solution such reagents must have appropriate chemical profiles, specifically potassium cyanide, which serves to bind the metals so as to obtain water soluble salts thereof, is a compound having CAS n° 143-33-9, sodium nitrobenzosulphonate, which serves to accelerate the dissolution chemical reaction, is a compound having CAS n° 127-68-4 and thallium sulphate, which serves to make the chemical reaction irreversible, is a compound having CAS n° 7446-18-6.

Such a solution is prepared continuously by means of automatic dispensers in closed polypropylene or 316L steel tanks having an automatic mixer or circulating pump.

The pursued dissolution of the metals is obtained by washing the materials containing them in different closed polypropylene or steel tanks, in which the mass formed by the materials is immersed in the dissolution solution, prepared as previously described, in a weight/volume (g/ml) ratio of the materials containing the noble metals: dissolution solution of at least 1:2 and preferably comprised from 1:2.5 to 1:10 for a time in the range at least between 2 and 10 minutes at a temperature in the range between 40°C and 60° C. Such a washing step is preferably carried out under ultrasonication and in rotating barrels. Indeed, dissolution may be further promoted by means of a 1500 - 2000 watt ultrasonication. Such an ultrasonication essentially serves to physically accelerate dissolution and thus answers the purpose of reducing times and/or making the action of the dissolution reagents employed more effective. The materials containing the noble materials to be recovered are immersed in the dissolution solution in mesh wired baskets to facilitate the removal of the exhausted solid materials and the rinsing thereof in other tanks containing water. Such a washing operation may be repeated up to saturation of the dissolution solution on the same materials or on other materials.

The exhausted solid materials remaining from the dissolution step may be rinsed in water and dried, for instance by centrifugation, to recover residual liquid consisting of the dissolution solution containing noble metals. Such a residual liquid is therefore pooled with the previously obtained aqueous solution containing the dissolved noble metals.

Subsequently, the metals contained in the concentrated solution may be separated and extracted by methods known to a person skilled In the art such as, for instance, electrolysis, zinc or aluminium precipitation with previous basification of the solution with alkali metal hydroxides, and preferably with NaOH, at a concentration of 1.5-3.0% w/v (g/ml).

Among the separation methods, electrolysis is preferably used, as it ensures a virtually total recovery of the noble metals, especially gold. Electrolysis indeed allows to obtain a recovery of such metals up to 99.9%.

In a possible embodiment, electrolysis may be carried out by ferrous anodes and lead cathodes with low voltage direct current, or in another possible embodiment the electrolysis process may be performed by anodes and cathodes consisting of pure gold sheets having 0.1 mm thickness hanging from sliver supports placed in parallel at a 3 cm distance from one another, whereas the troughs are arranged in series. The current feeding the electrolytic bath may be equivalent to 8 A (= 1000 A/m²) with a voltage equivalent to 1.3 - 1.5 Volts.

Alternatively, the noble metals contained in the concentrated solution may be separated by zinc or aluminium precipitation in which Zn or Al are added to the solution containing the dissolved noble metals at a concentration in the range from 10 g/L and 15 g/L and preferably equivalent to 12 g/L, with a previous basification of the solution in a range of pH values from 10 to 1-4 with alkali metal hydroxides, and preferably NaOH, in a concentration from 1.5 to 3 % w/v (g/ml). In this manner a solid residue is obtained which is recovered by sedimentation and subsequent vacuum filtration. This solid residue is then treated by a classical refining method by means of "aqua regia".

Specifically, 2 L of H₂O, 450 ml of 65% HNO₃, 2 L of 37% HCl are added for each kg of solid residue, and the mixture is reacted for approximately 4 hours, during which period the chloride of the dissolved noble metal (e.g. gold) salt is formed.

Then the mixture is filtered and the metal is subsequently selectively precipitated, by using up to 4 kg of ferrous sulphate eptahydrate for each kg of metal or as an alternative 1 (one) L of 23 % hydrazine. The gold precipitated in the form of a light brown metal sponge is melted at 1080 °C to obtain the corresponding ingot. Instead, the solution devoid of dissolved metals is then concentrated to a volume of 10-15% with respect to the initial volume with the recovery of water which may be recycled for the preparation of the starting dissolution solution. Such a concentration may be obtained by known means, for instance heat evaporation, though it is preferably obtained by vacuum evaporation.

The residue remaining after this step, which contains water, the reagents of the dissolution solution and other non noble metals is then totally concentrated by drying, thus obtaining water on one side and the dry reagents and base metals on the other. This mass is sent to specialised centres or industries for the recovery of the metals and the final disposal of the chemical reagents.

In general, in a possible embodiment thereof, the method object of the present invention may be represented according to the process diagram in figure 1 and comprises the steps of:
a) preparing a dissolution solution for such metals comprising potassium cyanide in a range from 1.5 to 2.5 % w/v (g/100 ml), sodium nitrobenzosulphonate in a range from 0.6 to 1.0 % w/v (g/100 ml), thallium sulphate in a range between 0.015 and 0.025 % w/v (g/100 ml);
b) optionally, grinding the discard materials;
c) washing the materials containing the metals to be recovered once or more with the aqueous dissolution solution of step a) to complete saturation of the dissolution solution itself;
d) rinsing and drying the exhausted solid residue to be removed with the recovery of residual liquid consisting of dissolution solution containing noble metals of the previous step and recycling the water for step a);
e) concentrating the saturated noble metal solution obtained in step c) with the addition of the liquid obtained in step d);
f) separating and extracting noble metals from the concentrated solution obtained in step e) and recycling water in step a);
g) concentrating the solution devoid of noble metals obtained in step f);
h) drying and removing the exhausted discard solid residue.

By the method described, very high recovery yields may be obtained for noble metals and, specifically, with one litre of a dissolution solution containing 2% potassium cyanide, 0.8% sodium nitrobenzosulphonate and 0.02% thallium sulphate, 12 to 15 grams of noble metals may be recovered from electric material discards with a dissolution rate in the order of 10 minutes that decreases for gold, silver and palladium.

Examples of the recovery of noble metals according to the invention from different discard materials are described by way of non-limitative example.

### Example 1

### Discard material: gold contacts

sample N° 1 grams 12.72 solution volume 0.300 litres
sample N° 2 grams 14.45 solution volume 0.300 litres
sample N° 3 grams 14.73 solution volume 0.300 litres

### Immersion times: 5 - 15 - 30 minutes

Au content g/kg reading by VARIAN AAS 220F apparatus

| | | |
|---|---|---|
| sample N° 1 readings | 5.990 - 6.025 - 6.048 | average 6.021 |
| sample N° 2 readings | 5.838 - 5.830 - 5.846 | average 5.838 |
| sample N° 3 readings | 6.160 - 6.151 - 6.151 | average 6.154 |

AVERAGE OF 3 SAMPLES grams of Au per Kg of discard 6.004

### Example 2

### Discard material: gold jacks

sample N° 1 grams 28.33 solution volume 0.300 litres
sample N° 2 grams 19.47 solution volume 0.300 litres
sample N° 3 grams 24.11 solution volume 0.300 litres

### Immersion times: 5 - 15 - 30 minutes

Au content g/kg reading by VARIAN AAS 220F apparatus

| | | |
|---|---|---|
| sample N° 1 readings | 1.998 - 2.024 - 2.022 | average 2.018 |
| sample N° 2 readings | 2.200 - 2.218 - 2.269 | average 2.229 |
| sample N° 3 readings | 2.098 - 2.090 - 2.088 | average 2.092 |

AVERAGE OF 3 SAMPLES grams of Au per Kg of discard 2.113

### Example 3

### Discard material: electronic card size 32.0 x 18.5 cm

| | | |
|---|---|---|
| Weight | grams 919.30 | solution volume litres 2.600 |

Immersion time: 5 - 10 - 20 minutes

| | |
|---|---|
| Au content g/kg | reading by VARIAN AAS 220F apparatus |
| Readings: | 0.745 - 0.730 - 0.720 |

AVERAGE grams of Au per Kg of discard 0.735

With respect to the known methods, the method object of the present invention is very effective and less polluting and hazardous for the operators because it is carried out in mild conditions and closed cycle. Furthermore, it is especially cost-effective as far as reagent costs and system running are concerned, as well as being advantageous in terms of recovered metals yield.

## Claims

1. A method for the recovery of noble metals **characterised in that** said metals are dissolved from materials that contain them with an aqueous dissolution solution comprising potassium cyanide in a range from 1.5 to 2.5% w/v, sodium nitrobenzosulphonate in a range from 0.6 to 1.0% w/v, thallium sulphate in a range from 0.015 to 0.025% w/v.

2. The method for the recovery of noble metals according to claim 1, wherein the aqueous dissolution solution comprises 2.0% w/v potassium cyanide, 0.8% w/v sodium nitrobenzosulphonate and 0.02% w/v thallium sulphate.

3. The method for the recovery of noble metals according to claim 1, wherein the dissolution is obtained by means of one or more washings of the materials containing the noble metals to be extracted with the aqueous dissolution solution in a weight:volume ratio between said materials and said solution of at least 1:2.

4. The method for the recovery of noble metals according to claim 3, wherein the weight:volume ratio between the materials containing noble metals to be extracted and the dissolution solution is in a range from 1:2.5 to 1:10.

5. The method for the recovery of noble metals according to claims 3 and 4, wherein the dissolution is obtained for a time in the range between at least of 2 and 10 minutes and at a temperature between 40° C and 60°C.

6. The method for the recovery of noble metals according to claims 3 and 4, wherein an ultrasonication is associated to the washing.

7. The method for the recovery of noble metals according to claims 1-6 further comprising the steps of:
- rinsing and drying the exhausted solid residue to be removed with the recovery of the residual dissolution liquid containing the recovered noble metals;
- separating the dissolved metals and recovering them from a concentrated solution obtained with the washings;
- concentrating the solution devoid of the noble metals with the recovery of water;
- drying and removing exhausted solid residues.

8. The method for the recovery of noble metals according to claim 7, wherein the concentration of the solution containing the noble metals is obtained by vacuum evaporation.

9. The method for the recovery of noble metals according to claim 7, wherein the separation of the noble metals is obtained by means of electrolysis or by zinc or aluminium precipitation with previous basification of the solution with alkali metal hydroxides.

10. A composition consisting of an aqueous solution comprising potassium cyanide in a range from 1.5 to 2.5% w/v, sodium nitrobenzosulphonate in a range from 0.6 to 1.0% w/v, thallium sulphate in a range from 0.015 to 0.025% w/v, wherein said composition is employed for the dissolution of noble metals from materials containing them.

11. The composition according to claim 10, wherein the aqueous solution comprises 2.0% w/v potassium cyanide, 0.8% w/v sodium nitrobenzosulphonate and 0.02% w/v thallium sulphate.

12. Use of the composition according to claims 10 and 11 for the dissolution of noble metals from materials containing them.

## Patentansprüche

1. Ein Verfahren zur Rückgewinnung von Edelmetallen, **dadurch gekennzeichnet, daß** die Metalle aus Materialien, die diese enthalten, gelöst werden mit einer wäßrigen Auflösungs-Lösung, die Kaliumcyanid in einem Bereich von 1,5 bis 2,5 % Gewicht/Volumen, Natriumnitrobenzosulfonat in einem Bereich von 0,6 bis 1,0 % Gewicht/Volumen, Thalliumsulfat in einem Bereich von 0,015 bis 0,025 % Gewicht/Volumen umfaßt.

2. Verfahren zur Rückgewinnung von Edelmetallen nach Anspruch 1, worin die wäßrige Auflösungs-Lösung 2,0 % Gewicht/Volumen Kaliumcyanid, 0,8 % Gewicht/Volumen Natriumnitrobenzosulfonat und 0,02 % Gewicht/Volumen Thalliumsulfat umfaßt.

3. Verfahren zur Rückgewinnung von Edelmetallen nach Anspruch 1, worin das Herauslösen erreicht wird mittels einer oder mehrerer Waschungen der Materialien, die die zu extrahierenden Edelmetalle enthalten, mit der wässrigen Auflösungs-Lösung in einem Gewichts-/Volumen-Verhältnis zwischen diesen Materialien und der Lösung von wenigstens 1 : 2.

4. Verfahren zur Rückgewinnung von Edelmetallen nach Anspruch 3, worin das Gewichts-/Volumen-Verhältnis zwischen den Materialien, die die zu extrahierenden Edelmetalle enthalten, und der Auflösungs-Lösung in einem Bereich von 1 : 2,5 bis 1 : 10 liegt.

5. Verfahren zur Rückgewinnung von Edelmetallen nach den Ansprüchen 3 und 4, worin das Herauslösen erreicht wird in einer Zeit, die im Bereich zwischen wenigstens 2 und 10 Minuten liegt, und bei einer Temperatur zwischen 40 °C und 60 °C.

6. Verfahren zur Rückgewinnung von Edelmetallen nach den Ansprüchen 3 und 4, worin eine Ultraschall-Behandlung mit der Waschung verbunden wird.

7. Verfahren zur Rückgewinnung von Edelmetallen nach den Ansprüchen 1 bis 6, welches darüber hinaus die Schritte umfaßt, daß man
- den erschöpften festen Rückstand, der mit der Rückgewinnung der restlichen Auflösungs-Flüssigkeit, die die rückgewonnenen Edelmetalle enthält, entfernt werden soll, spült und trocknet;
- die gelösten Metalle trennt und diese aus einer konzentrierten Lösung rückgewinnt, die mit den Waschungen erhalten wurde;
- die Lösung, die frei ist von Edelmetallen, mit der Rückgewinnung von Wasser konzentriert;
- die erschöpften festen Rückstände trocknet und entfernt.

8. Verfahren zur Rückgewinnung von Edelmetallen nach Anspruch 7, worin die Konzentrierung der Lösung, die die Edelmetalle enthält, erreicht wird durch Vakuumverdampfung.

9. Verfahren zur Rückgewinnung von Edelmetallen nach Anspruch 7, worin die Trennung der Edelmetalle erreicht wird mittels Elektrolyse oder Zink- oder Aluminium-Präzipitation mit vorangehendem Basischmachen der Lösung mit Alkalimetallhydroxiden.

10. Zusammensetzung, die aus einer wäßrigen Lösung besteht, die Kaliumcyanid in einem Bereich von 1,5 bis 2,5 % Gewicht/Volumen, Natriumnitrobenzosulfonat in einem Bereich von 0,6 bis 1,0 % Gewicht/Volumen, Thalliumsulfat in einem Bereich von 0,015 bis 0,025 % Gewicht/Volumen umfaßt, worin die Zusammensetzung eingesetzt wird für das Herauslösen von Edelmetallen aus Materialien, die diese enthalten.

11. Zusammensetzung nach Anspruch 10, worin die wäßrige Lösung 2,0 % Gewicht/Volumen Kaliumcyanid, 0,8 % Gewicht/Volumen Natriumnitrobenzosulfonat und 0,02 % Gewicht/Volumen Thalliumsulfat umfaßt.

12. Verwendung der Zusammensetzung nach den Ansprüchen 10 und 11 für das Herauslösen von Edelmetallen aus Materialien, die diese enthalten.

## Revendications

1. Procédé de récupération de métaux nobles **caractérisé en ce que** lesdits métaux nobles sont dissous à partir de matériaux qui les contiennent avec une solution de dissolution aqueuse comprenant du cyanure de potassium dans une plage de 1,5 à 2,5 % p/v, du nitrobenzosulfonate de sodium dans une plage de 0,6 à 1,0 % p/v, du sulfate de thallium dans une plage de 0,015 à 0,025 % p/v.

2. Procédé de récupération de métaux nobles selon la revendication 1, dans lequel la solution de dissolution aqueuse comprend 2,0 % p/v de cyanure de potassium, 0,8 % p/v de nitrobenzosulfonate de sodium et 0,02 % p/v de sulfate de thallium.

3. Procédé de récupération de métaux nobles selon la revendication 1, dans lequel la dissolution est obtenue au moyen d'un ou plusieurs lavages des matériaux contenant les métaux nobles à extraire avec la solution de dissolution aqueuse dans un rapport poids:volume entre lesdits matériaux et ladite solution d'au moins 1:2.

4. Procédé de récupération de métaux nobles selon la revendication 3, dans lequel le rapport poids:volume entre les matériaux contenant des métaux nobles à extraire et la solution de dissolution est dans une plage de 1:2,5 à 1:10.

5. Procédé de récupération de métaux nobles selon les revendications 3 et 4, dans lequel la dissolution est obtenue pendant un temps dans la plage entre au moins 2 et 10 minutes et à une température entre 40 °C et 60 °C.

6. Procédé de récupération de métaux nobles selon les revendications 3 et 4, dans lequel une ultrasonification est associée au lavage.

7. Procédé de récupération de métaux nobles selon les revendications 1 à 6, comprenant en outre les étapes de :
- rinçage et séchage du résidu solide épuisé à éliminer avec la récupération du liquide de dissolution résiduelle contenant les métaux nobles récupérés ;
- séparation des métaux dissous et leur récupération à partir d'une solution concentrée obtenue avec les lavages ;
- concentration de la solution dépourvue des métaux nobles avec la récupération d'eau ;
- séchage et élimination de résidus solides épuisés.

8. Procédé de récupération de métaux nobles selon la revendication 7, dans lequel la concentration de la solution contenant les métaux nobles est obtenue par évaporation à vide.

9. Procédé de récupération de métaux nobles selon la revendication 7, dans lequel la séparation des métaux nobles est obtenue au moyen d'une électrolyse ou par précipitation de zinc ou d'aluminium avec basification préalable de la solution avec des hydroxydes de métal alcalin.

10. Composition consistant en une solution aqueuse comprenant du cyanure de potassium dans une plage de 1,5 à 2,5 % p/v, du nitrobenzosulfonate de sodium dans une plage de 0,6 à 1,0 % p/v, du sulfate de thallium dans une plage de 0,015 à 0,025 % p/v, dans laquelle ladite composition est employée pour la dissolution de métaux nobles à partir de matériaux les contenant.

11. Composition selon la revendication 10, dans laquelle la solution aqueuse comprend 2,0 % p/v de cyanure de potassium, 0,8 % p/v de nitrobenzosulfonate de sodium et 0,02 % p/v de sulfate de thallium.

12. Utilisation de la composition selon les revendications 10 et 11 pour la dissolution de métaux nobles à partir de matériaux les contenant.
